# EUROPÄISCHE PATENTSCHRIFT

(11) **EP 3 377 303 B1**
(45) Veröffentlichungstag und Bekanntmachung des Hinweises auf die Patenterteilung: **08.07.2020**
(21) Anmeldenummer: 16753663.0
(22) Anmeldetag: 18.08.2016
(51) Int. Cl.: B22F 3/105, B29C 67/00, B29C 64/153, B29C 64/35, B33Y 30/00, B33Y 40/00, B29C 64/357

(54) **FORMHERSTELLUNGSVORRICHTUNG ZUR HERSTELLUNG VON FORMKÖRPERN DURCH ORTSSELEKTIVES VERFESTIGEN VON WERKSTOFFPULVER**
DEVICE FOR PRODUCING MOULDED BODIES BY LOCATION-SELECTIVE SOLIDIFYING OF MATERIAL POWDER
DISPOSITIF DESTINÉ À FABRIQUER DES CORPS MOULÉS PAR SOLIDIFICATION LOCALEMENT SÉLECTIVE D'UN MATÉRIAU PULVÉRULENT

(30) Priorität: 17.11.2015 DE 102015222689
(43) Veröffentlichungstag der Anmeldung: 26.09.2018
(73) Patentinhaber: Realizer GmbH, 33178 Borchen (DE)
(72) Erfinder: GOLZ, Daniel, 33449 Langenberg (DE); FOCKELE, Matthias, 33178 Borchen (DE)
(74) Vertreter: Weickmann & Weickmann PartmbB
(86) Internationale Anmeldenummer: PCT/EP2016/069613
(87) Internationale Veröffentlichungsnummer: WO 2017/084781

(56) Entgegenhaltungen:
- CN-A- 104 741 610
- DE-A1-102009 029 765
- DE-A1-102009 036 153
- DE-C1- 10 053 741
- DE-U1-202009 000 825
- US-A1- 2004 012 112

## Beschreibung

### Beschreibung

Die Erfindung betrifft eine Formherstellungsvorrichtung zur Herstellung von Formkörpern durch ortsselektives Verfestigen von Werkstoffpulver zu zusammenhängenden Bereichen.

Die Erfindung bezieht sich insbesondere auf eine Formherstellungsvorrichtung zur Herstellung von Formkörpern nach dem Prinzip des selektiven Laserschmelzens oder des selektiven Lasersinterns. Zum Stand der Technik betreffend das Gebiet des selektiven Laserschmelzens kann z. B. auf die DE 199 05 067 A1, DE 101 12 591 A1, WO 98/24574 A, DE 10 2009 038 165 A1, DE 10 2012 221 641 A1 und EP 20 52 845 A2 verwiesen werden.

Es ist bekannt, dass mit dem Verfahren des selektiven Laserschmelzens Formkörper, wie etwa Maschinenteile, Werkzeuge, Prothesen, Schmuckstücke usw. entsprechend Geometriebeschreibungsdaten der entsprechenden Formkörper durch schichtweises Aufbauen aus metallischem oder keramischem Werkstoffpulver hergestellt werden können, wobei in einem Herstellungsprozess nacheinander mehrere Pulverschichten übereinander aufgebracht werden und jede Pulverschicht vor dem Aufbringen der nächstfolgenden Pulverschicht mit einem normalerweise fokussiertem Laserstrahl in einem vorgegebenen Bereich, der einem ausgewählten Querschnittsbereich des Modells des Formkörpers entspricht, erhitzt wird, so dass das Werkstoffpulver in den bestrahlten Bereichen zu zusammenhängend verfestigten Abschnitten umgeschmolzen wird. Der Laserstrahl wird dabei jeweils entsprechend den Geometriebeschreibungsdaten des ausgewählten Querschnittsbereichs des Formkörpers oder ggf. daraus abgeleiteten Daten über die jeweilige Pulverschicht geführt. Das Werkstoffpulver wird beim selektiven Laserschmelzen normalerweise als bindemittel- und flussmittelfreies, metallisches, keramisches oder gemischt metallisch/keramisches Werkstoffpulver aufgebracht und durch den Laserstrahl auf Schmelztemperatur erhitzt, wobei die Energie des Laserstrahls so gewählt wird, dass das Werkstoffpulver an der Auftreffstelle des Laserstrahls über seine gesamte Schichtdicke möglichst vollständig aufgeschmolzen wird. Über der Zone der Wechselwirkung zwischen dem Laserstrahl und dem Werkstoffpulver wird üblicherweise eine Schutzgas-Atmosphäre z. B. ArgonAtmosphäre aufrecht erhalten.

Bei einer aus der EP 2 052 845 A2 bekannten Vorrichtung handelt es sich um eine Formherstellungsvorrichtung, die nach dem Prinzip des selektiven Laserschmelzens funktioniert. Sie umfasst eine Pulverwiederaufbereitungseinrichtung oder Pulverrückgewinnungseinrichtung zur Rückgewinnung von nicht verbrauchtem, überschüssigem Werkstoffpulver aus dem Prozessraum. Die Puverrückgewinnungseinrichtung umfasst eine Pulverausbringeinrichtung zum Ausbringen von Pulver aus dem Prozessraum und eine Pulversammeleinrichtung zum Sammeln des aus dem Prozessraum ausgebrachten Pulvers, wobei die Pulverrückgewinnungseinrichtung so gestaltet und an dem Prozessraum angeschlossen ist, dass die Puverrückgewinnung in einem nach außen abgeschlossenen Bereich in Schutzgas-Atmosphäre durchführbar ist. Die Pulverausbringeinrichtung der bekannten Formherstellungsvorrichtung umfasst eine Pulverabsaugeinrichtung mit einem in den Prozessraum hineinragenden Saugrüssel, dessen Saugöffnung zu verschiedenen Stellen innerhalb des Prozessraums führbar ist. Die Pulverrückgewinnungseinrichtung weist eine Siebvorrichtung auf, mittels welcher grobe Bestandteile aus dem nicht verbrauchten, überschüssigen Werkstoffpulver aus früheren Formherstellungsprozessen der Formherstellungsvorrichtung abgefangen werden können, wobei das durchgesiebte feinere Pulver in einen flaschenförmigen Auffangbehälter gelangt, der von der Siebvorrichtung trennbar und an eine Pulvereinlassschnittstelle des Prozessraums anschließbar ist. Bei der bekannten Formherstellungsvorrichtung befindet sich die Pulvereinlassschnittstelle an der Oberseite des Prozessraumgehäuses. Von dort kann Werkstoffpulver in eine Vorratskassette einer Pulverschichtenpräparierungseinrichtung in dem Prozessraum eingebracht werden.

Das aus der EP 20 52 845 A2 bekannte Prinzip, den Nachschub von zu verarbeitendem Werkstoffpulver über eine obere Prozessraumschnittstelle in Pulverreservoirgefäße der Schichtenpräparationseinrichtung einzubringen, wurde bei einer aus der DE 10 2012 221 641 A1 bekannten Formherstellungsvorrichtung verlassen. Letztere ist mit einer Pulverfördereinrichtung ausgestattet, bei der ein Pulvereinlass mit seiner Einlassmündung in dem Boden des Prozessraums vorgesehen ist. Eine Pulverzuführeinrichtung dieser bekannten Pulverfördereinrichtung weist einen den Pulvereinlass mit einem Werkstoffpulvervorrat verbindenden Förderkanal mit einer darin längs angeordneten Pulverförderschnecke zur Förderung von Werkstoffpulver zum Pulvereinlass des Prozessraums auf. Ein ähnliches Konzept wird auch bei der Formherstellungsvorrichtung gemäß der DE 10 2009 038 165 A1 verfolgt.

Die vorstehend angesprochenen Formherstellungsvorrichtungen nach dem Stand der Technik haben sich allgemein als zuverlässig in ihrer Funktion bei der Herstellung diverser Formkörper erwiesen.

Auch ist z. B. in der EP 20 52 845 A2 schon die Möglichkeit der Herstellung eines Formkörpers aus mehreren Werkstoffpulvern erwähnt. Es besteht durchaus Nachfrage nach solchen Formkörpern, die Zonen aus unterschiedlichen Werkstoffmaterialien aufweisen, seien es unterschiedliche Metalle oder einander abwechselnde Zonen aus Metall und Keramik usw.. Bei solchen Formkörpern kann es sich z. B. um Schmuckstücke, Zahnersatzelemente, Feinstfiltersysteme usw. handeln. Dabei ist es normalerweise gefordert, dass sich die Materialien der verschiedenen Zonen nicht mischen. Dies bedeutet, dass nach Herstellung einer ersten Zone das komplette pulverleitende System der Formherstellungsvorrichtung vom bisherigen Werkstoffpulver befreit werden muss, bis das sich davon unterscheidende Werkstoffpulver für die nächste Zone des Formkörpers in dem Formherstellungsprozess verwendet werden kann. Eine solche Vorgehensweise ist bei Formherstellungsvorrichtungen mit integrierten Pulverwiederaufbereitungseinrichtungen schwierig, da insbesondere die Reinigung der diversen Komponenten der Pulverwiederaufbereitungseinrichtung vom vorausgehend für den Bauprozess verwendeten Pulver allgemein schwierig und aufwändig ist.

Aus der US 2004/0012112 A1 ist ein sogenannter 3D-Drucker bekannt, mittels welchem Formkörper entsprechend Geometriebeschreibungsdaten durch schichtweises Aufbauen aus Kunststoffpulver hergestellt werden können, wobei in einem Herstellungsprozesss nacheinander mehrere Pulverschichten übereinander aufgebracht werden und jede Pulverschicht vor dem Aufbringen der nächstfolgenden Pulverschicht mit einer Bindeflüssigkeit in einem vorgegebenen Bereich, der einem ausgewählten Querschnittsbereich des Modells des Formkörpers entspricht, benetzt wird, sodass das Werkstoffpulver in den benetzten Bereichen zu zusammenhängend verfestigten Abschnitten gebunden wird. Dies erfolgt in einem Prozessraum. Der Prozessraum und dazugehörige Komponenten sind in einer sogenannten Druckereinheit untergebracht. Ferner umfasst die aus der US 2004/0012112 A1 bekannte Formherstellungsvorrichtung ein Wechselmodul mit einem Vorratsvolumen für das Werkstoffpulver sowie ein in dem Wechselmodul vorgesehenes Saugsystem zum Zwecke der Pulverföderung zwischen dem Wechselmodul und dem Prozessraum sowie zur Abreinigung überschüssigen Pulvers. Es können mehrere untereinander austauschbare Wechselmodule vorhanden sein, die unterschiedliche Werkstoffpulver enthalten. Ein Zyklonabscheider ist vorgesehen, um Grobbestandteile des Werkstoffpulvers von Feinbestandteilen zu trennen und die Feinbestandteile einer Wiederverwendung in einem Formkörperherstellungsprozess zuzuführen.

Die vorliegende Erfindung gemäß Anspruch 1 basiert ebenfalls auf der Idee der Verwendung von Wechselmodulen und gemäß einer bevorzugten Variante auf eine Formherstellungsvorrichtung zur Herstellung von Formkörpern durch ortsselektives Verfestigen von Werkstoffpulver zu zusammenhängenden Bereichen, welche umfasst:
- einen Prozessraum mit einem Pulvereinlass für zu verarbeitendes Werkstoffpulver und einem Pulverauslass für überschüssiges Werkstoffpulver,
- eine an dem Pulvereinlass angeschlossene oder anschließbare Pulverversorgungseinrichtung zur Bereitstellung von Werkstoffpulver in dem Prozessraum und
eine an dem Pulverauslass angeschlossene oder anschließbare Pulverwiederaufbereitungseinrichtung zur Rückgewinnung von zu verarbeitendem Werkstoffpulver aus dem überschüssigen Werkstoffpulver, wobei die Pulverversorgungseinrichtung und die Pulverwiederaufbereitungseinrichtung zu einer als Wechselmodul ausgestatteten Baugruppe zusammengefasst sind, welches Anschlussschnittstellen, nämlich wenigstens eine Eingangsschnittstelle und wenigstens eine Ausgangsschnittstelle aufweist, die anschlusskompatibel mit betreffenden Anschlussschnittstellen des Pulvereinlasses und des Pulverauslasses des Prozessraums sind, so dass einerseits überschüssiges Pulver aus dem Prozessraum durch dessen Pulverauslass hindurch der Pulverwiederaufbereitungseinrichtung durch die wenigstens eine Eingangsschnittstelle zugeführt werden kann und andererseits von der Pulverwiederaufbereitungseinrichtung aufbereitetes Werkstoffpulver durch die wenigstens eine Ausgangsschnittstelle dem Prozessraum durch dessen Pulvereinlass hindurch zugeführt werden kann.

Das Wechselmodul kann von der Formherstellungsvorrichtung getrennt - und durch ein gleichartiges Wechselmodul ersetzt werden, welches z. B. für das Handling mit einem Werkstoffpulver vorbereitet ist, das sich vom Werkstoffpulver des abgelösten Wechselmoduls beispielsweise in Material oder/und der Korngrößenverteilung unterscheidet. Dabei ist vor dem Wechsel der Wechselmodule dafür zu sorgen, dass sämtliches in dem Prozessraum befindliches Werkstoffpulver aus dem Prozessraum ausgebracht wird, insbesondere vollständig in das Wechselmodul eingebracht wird, so dass nach Anschluss des folgenden Wechselmoduls kein Rest des Werkstoffpulvers aus den vorausgegangenen Formherstellungsschritten mehr zu Verunreinigungen führen kann. Das Befreien des Prozessraums von Werkstoffpulver ist normalerweise relativ einfach möglich, da der Prozessraum üblicherweise eine übersichtliche Geometrie aufweist, so dass jede Stelle des Prozessraums mit einer Pulverabsaugeinrichtung, z. B. einem Pulversaugschlauch, erreichbar ist.

Nach dem vorstehend angesprochenen Konzept bereitet die im Allgemeinen kompliziertere und verschachtelte Geometrie der Pulverversorgungseinrichtung und der Pulverwiederaufbereitungseinrichtung diesbezüglich keine Probleme, da diese Komponenten in dem Wechselmodul zusammengefasst sind und das jeweilige Wechselmodul stets mit dem gleichen Werkstoffpulver betrieben werden kann, so dass keine aufwändigen Reinigungsvorgänge bei den Wechselmodulen erforderlich sind.

Gemäß einer besonders bevorzugten Ausführungsform ist das jeweilige Wechselmodul aus einer Trennstellung heraus, in der es von der Formherstellungsvorrichtung separiert ist, in einer definierte Anschlussstellung überführbar, in der es so in die Formherstellungsvorrichtung integriert ist, dass die einander zugeordneten Anschlussschnittstellen aneinander angeschlossen oder anschließbar sind. Dabei kann die Anordnung gemäß einer besonders bevorzugten Variante so getroffen sein, dass alle einander zugeordneten Anschlussschnittstellen beim Übergang des Wechselmoduls von der Trennstellung in die Anschlussstellung automatisch korrekt aneinander angeschlossen werden.

Dabei kommen die Anschlussschnittstellen so miteinander in Verbindung, dass sie einen nach außen gut abgedichteten Übergang zwischen dem Wechselmodul und dem Prozessraum für die erforderliche Pulverbewegung bieten. Das Konzept des beim Übergang des Wechselmoduls in die Anschlussstellung automatisch korrekten Anschließens kann auch auf die Verbindung sonstiger Versorgungsleitungen übertragen sein, etwa auf einen korrekten Anschluss von Stromübertragungsschnittstellen, Datenübertragungsschnittstellen, Schutzgasleitungsschnittstellen, Wasserleitungsschnittstellen usw..

Die Pulverwiederaufbereitungseinrichtung in dem Wechselmodul umfasst vorzugsweise eine Siebvorrichtung, z. B. Ultraschall-Siebvorrichtung, insbesondere zum Abfangen von Grobbestandteilen aus überschüssigem Werkstoffpulver aus dem Prozessraum. Solche Grobbestandteile können bei einem Bauprozess entstehen, etwa wenn Schmelzspritzer in das Pulverbett gelangen und dort zu einem Zusammenbacken mehrerer Pulverkörner jeweils führen, die dann die erwähnten Grobbestandteile bilden. Findet dies in Bereichen des Pulverbettes statt, die nicht zu Bereichen des Formkörpers werden und mithin überschüssiges Werkstoffpulver enthalten, so gelangen die betreffenden Grobbestandteile schließlich in die Pulverwiederaufbereitungseinrichtung bzw. die Siebvorrichtung, um dort abgeschieden zu werden.

Die Siebvorrichtung ist in der Anschlussstellung des Wechselmoduls ausgangsseitig an der Ausgangsschnittstelle angeschlossen, so dass gesiebtes Werkstoffpulver durch die Ausgangsschnittstelle hindurch dem Pulvereinlass des Prozessraums als zu verarbeitendes Werkstoffpulver zuführbar ist. Zweckmäßigerweise ist gemäß einer Weiterbildung der Erfindung zwischen der Siebvorrichtung und der Ausgangsschnittstelle ein Pufferbehälter für gesiebtes Werkstoffpulver vorgesehen, so dass stets ein ausreichender Vorrat für die jeweilige Pulverschichtenpräparation im Prozessraum vorhanden ist. Insbesondere wird vorgeschlagen, dass der Siebvorrichtung Fördermittel zum Fördern von gesiebtem Pulver zum Pulvereinlass des Prozessraums nachgeschaltet sind, wobei solche Fördermittel Teil des Wechselmoduls oder/und Teil der Formherstellungsvorrichtung im Übrigen sein können. Insbesondere wenn es sich bei diesen Fördermitteln um eine Förderschneckeneinrichtung handelt, kann es vorgesehen sein, dass diese die Ausgangsschnittstelle des Wechselmoduls und die in der Anschlussstellung des Wechselmoduls mit der Ausgangsschnittstelle verbundene, dem Prozessraum zugeordnete Anschlussschnittstelle durchsetzt. Die Förderschnecke verbleibt vorzugsweise an dem Wechselmodul, wenn das Wechselmodul von der Formherstellungsvorrichtung getrennt wird.

Der Siebvorrichtung kann zum Beispiel eine Partikelgrößenmesseinrichtung, vorzugsweise optische Partikelgrößenmesseinrichtung, nachgeschaltet sein, deren Messergebnisse insbesondere zur automatischen Erfassung der Korngrößenverteilung des gesiebten Pulvers genutzt werden. Ändert sich die Korngrößenverteilung in signifikanter Weise, so kann die Maschinensteuerung z. B. ein Alarmsignal abgeben, welches dazu auffordert, Pulver mit betreffenden Korngrößen in den Prozess einzubringen, so dass die gewünschte Korngrößenverteilung des dem Prozessraum zuzuführenden Pulvers zumindest annähernd wieder erreicht wird. Diesbezüglich wird auf die WO 2014/167100 A1 verwiesen, deren Inhalt durch Bezugnahme in den Offenbarungsgehalt der vorliegenden Anmeldung einbezogen sein soll. Das Ausgleichen der Korngrößenverteilung kann weitgehend automatisiert werden.

Vorzugsweise hat das Wechselmodul einen der Eingangsschnittstelle nachgeschalteten Pulverauffangbehälter zur Aufnahme von überschüssigem Werkstoffpulver aus dem Prozessraum und ggf. eines zusätzlich eingebrachten Neupulvervorrates desselben Materials. Hierbei kann es sich um einen Haupttank mit vergleichsweise großem Aufnahmevolumen handeln, in dem stets genug Pulver für einen betreffenden Bauprozess aufgenommen sein sollte.

Der Pulverauffangbehälter kann gemäß einer Variante der zuletzt genannten Ausführungsform in der definierten Anschlussstellung des Wechselmoduls niedriger angeordnet sein, als der Pulverauslass des Prozessraums, so dass überschüssiges Pulver vom Pulverauslass des Prozessraums aus unter Schwerkraftunterstützung in den Pulverauffangbehälter gelangen kann. Vorzugsweise befindet sich der Pulverauslass des Prozessraums in dem Boden des Prozessraumgehäuses, so dass der Pulverauffangbehälter im Wesentlichen vollständig unterhalb des Prozessraums angeordnet ist.

Gemäß einer Weiterbildung der Ausführungsform mit Pulverauffangbehälter wird vorgeschlagen, dass der Pulverauffangbehälter einen Pulverauslass aufweist und dass zwischen dem Pulverauslass des Pulverauffangbehälters und einem Pulvereinlass der Siebvorrichtung eine Fördereinrichtung zur Förderung von Werkstoffpulver vom Pulverauffangbehälter zur Siebvorrichtung vorgesehen ist. Damit wird erreicht, dass im laufenden Betrieb der Formherstellungsvorrichtung bedarfsweise immer wieder gesiebtes Werkstoffpulver in den Pufferbehälter gelangen kann, um daraus dem Prozessraum zugeführt zu werden.

Bei der Fördereinrichtung zur Förderung von Werkstoffpulver vom Pulverauffangbehälter zur Siebvorrichtung kann es sich z.B. um eine Gasstrom-Fördereinrichtung, insbesondere eine Schutzgasstrom-Fördereinrichtung mit einem Gasstrom-Kreislauf handeln, welche dazu eingerichtet ist, Pulverpartikel mittels eines Gasstromes zu fördern. Eine solche Gasstrom-Fördereinrichtung kann ausgangsseitig einen Abscheider, vorzugsweise Zyklonabscheider, aufweisen, der dazu eingerichtet ist, Pulverpartikel aus dem Gasstrom abzuscheiden und der Siebvorrichtung zuzuführen. Alternativ oder zusätzlich könnte die Fördereinrichtung auch eine Schneckenfördereinrichtung oder dgl. umfassen.

Eine ebenfalls bevorzugte Ausführungsform ist dadurch gekennzeichnet, dass der Pulverauslass des Prozessraums oder/und der Pulvereinlass des Prozessraums im Prozessraumboden münden. Auch dies ist eine Maßnahme, die eine Werkstoffpulverhandhabung ermöglicht, bei der der Prozessraum nicht unnötig mit Werkstoffpulver an schwierig erreichbaren Stellen kontaminiert wird, so dass eine Reinigung des Prozessraums von Pulver mit vergleichsweise geringem Aufwand möglich ist.

Weiterhin wird vorgeschlagen, dass das Wechselmodul Laufrollen und ggf. Führungsrollen aufweist und somit auf den Laufrollen verfahrbar ist, um in die definierte Anschlussstellung bzw. in die Trennstellung überführt zu werden. Damit ist das Bewegen des Wechselmoduls sehr einfach möglich.

Eine bevorzugte Vorgehensweise beim selektiven Laserschmelzen oder beim selektiven Lasersintern umfasst das Arbeiten im Prozessraum unter Schutzgasatmosphäre. In der DE 20 2009 000 825 U1 findet sich hierzu der Hinweis, dass der Betrieb eines solchen Systems in einer Schutzgasatmosphäre durchgeführt werden kann, was insbesondere bei hochreaktiven Pulvermaterialien von Vorteil ist. Insbesondere bei Formherstellungsvorrichtungen, welche in aufeinanderfolgenden Formherstellungsprozessen mit unterschiedlichen Werkstoffpulvern arbeiten, kann bei Verwendung einer Gasspüleinrichtung herkömmlicher Art das Problem in einem kritischen Maße auftreten, dass sich Feststoffpartikel, wie etwa Pulverteilchen oder kondensiertes Rauchgas, in Komponenten der Gasspüleinrichtung ablagern, z.B. in einer vom Spülgas durchströmten Filteranordnung oder in einer den Spülgasstrom erzeugenden Gasfördereinrichtung, und dass solche Feststoffpartikel eines Werkstoffs bei einem folgenden Formherstellungsprozess wieder freigesetzt werden und den Prozessraum ggf. verunreinigen, was insbesondere unerwünscht ist, wenn in dem genannten folgenden Formherstellungsprozess ein Werkstoffpulver anderer Art verwendet wird.

Der vorliegenden Erfindung liegt die Aufgabe zugrunde, das vorstehend angesprochene Problem der Gefahr der Prozessraumverunreinigung auf Grund von Spülrückständen wirksam zu minimieren.

Zur Lösung dieser Aufgabe wird erfindungsgemäß eine Formherstellungsvorrichtung gemäß Anspruch 1 vorgeschlagen.

Erfindungsgemäß wird der Wechselmodulgedanke aufgegriffen, wobei der Erfindung die Überlegung zu Grunde liegt, möglichst sämtliche Komponenten der Spüleinrichtung, die dazu neigen könnten, Feststoffpartikel, wie etwa Prozessrauchkondensat, anzusammeln, in einem Wechselmodul unterzubringen. Zu diesen Komponenten gehören eine Filteranordnung, welche vom Spülgas durchströmt wird, und eine den Spülgasstrom erzeugende Gasfördereinrichtung.

Weiterbildungen der Erfindung sind in den Ansprüchen 2 - 14 angegeben.

Die Spüleinrichtung kann zum Durchspülen des Prozessraums mit einem Spülgas während eines Bauprozesses genutzt werden, wobei sämtliche Komponenten der Spüleinrichtung, die dazu neigen könnten, Feststoffpartikel, wie etwa Prozessrauchkondensat aus dem Spülgas anzusammeln, in dem Wechselmodul untergebracht sein sollten.

Es können automatische Dichtvorrichtungen vorgesehen sein, welche an den Anschlussschnittstellen wirksam werden, um die betreffenden Anschlüsse dort nach außen hin abzudichten, so dass das Wechselmodul und der Prozessraum beim Abkoppeln des Wechselmoduls nach außen hin abgeschlossen sind und ein unbeabsichtigtes Eindringen von Außenluft weitgehend unterbunden wird.

Vorzugsweise ist die Spüleinrichtung dazu eingerichtet, das Spülgas in einem Spülgaskreislauf strömen zu lassen, der den Prozessraum, die Gasfördereinrichtung und die Filtereinrichtung in einer Reihenschaltung umfasst.

Eine weitere bevorzugte Ausführungsform der Erfindung umfasst eine Absaugvorrichtung zum Absaugen von restlichem Werkstoffpulver aus dem Prozessraum mittels eines Gasstroms nach Beendigung oder vor Beginn eines Bauprozesses, wobei auch ggf. eine eigene Förderpumpe und ein ggf. eigener Pulverabscheider dieser Absaugvorrichtung in dem Wechselmodul untergebracht sind.

Somit kommt auch für diese Weiterbildungen der übergeordnete Aspekt der Erfindung zum Ausdruck, dass möglichst viele Komponenten, die mit Werkstoffpulver kontaminiert werden könnten und nicht leicht zu reinigen sind, im Wechselmodul untergebracht werden, so dass die nach Entfernung des Wechselmoduls von der Formherstellungsvorrichtung an der Formherstellungsvorrichtung im Übrigen verbleibenden Komponenten auf einfache Weise schnell zu reinigen und/oder auf einfache und schnelle Weise austauschbar sind, wie etwa der Glättungsschieber oder Komponenten davon und das Absaughandhabungsmittel (Absaugschlauch) der Absaugvorrichtung.

Dieser Erfindungsgedanke kann noch weiter entwickelt werden, indem auch die Prozessraumkammer als solche austauschbar ist und z.B. Teil des Wechselmoduls ist. In diesem Fall könnten die genannten Schittstellen zwischen dem Prozessraum und dem Wechselmodul im Übrigen durch ununterbrochene durchgehende Leitungen ersetzt sein. In diesem Falle wäre es ferner zweckmäßig, dafür Sorge zu tragen, dass die Prozessraumkammer leicht von daran angrenzenden oder damit zusammenhängenden Komponenten, etwa der Bestrahlungseinrichtung oder des Hubantriebs für die Bauplattform oder/und des Antriebs für den Glättungsschieber separierbar ist. Andererseits kann es auch vorgesehen sein, dass der Glättungsschieber und sein Antrieb in der Prozessraumkammer verbleiben. Ferner ist eine Variante denkbar, bei der auch der Hubantrieb für die Bauplattform oder/und der die Bauplattform enthaltende Bauzylinder mit auswechselbar und ggf. Bestandteil des Wechselmoduls sind.

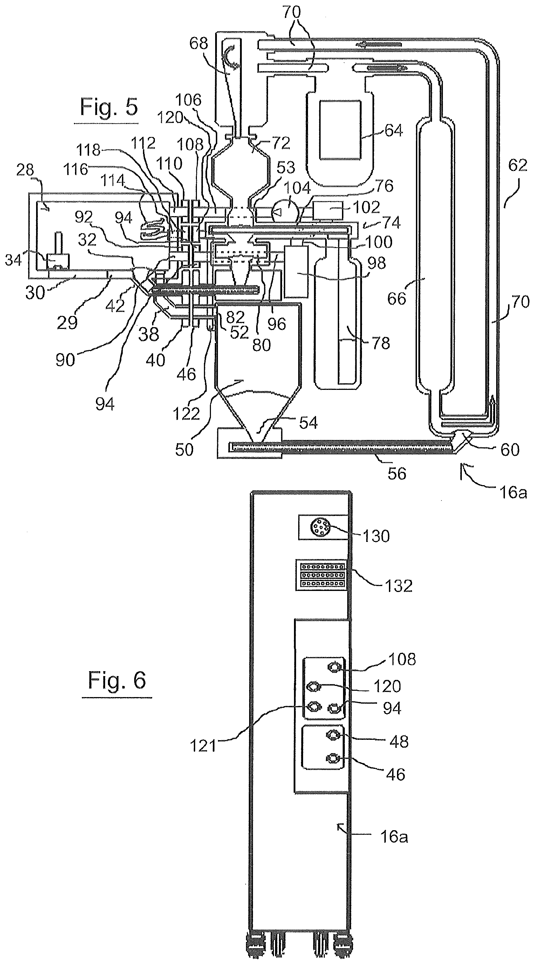

So könnten z.B. die in Figur 5 schematisch dargestellten Komponenten einschließlich des Prozessraums Bestandteil eines Wechselmoduls sein.

Vorzugsweise umfasst das Wechselmodul eine Datenverarbeitungseinrichtung, welche mit einer Steuereinrichtung in der Formherstellungsvorrichtung im Übrigen kommunizieren kann, um Zustandsmitteilungen des Wechselmoduls an die Steuereinrichtung zu senden und ggf. Steuerinformationen von letzterer zu erhalten. Die Informationen kann die Steuereinrichtung dann bei der Steuerung eines Bauprozesses berücksichtigen. Bei den Zustandsmitteilungen kann es sich beispielsweise um Angaben zu Art, Menge und/oder Korngrößen des im Wechselmodul bevorrateten Werkstoffpulvers handeln.

Gegenstand der Erfindung ist ferner ein Wechselmodul für eine Formherstellungsvorrichtung nach der Erfindung. Dieses Wechselmodul umfasst eine Pulverversorgungseinrichtung und eine Pulverwiederaufbereitungseinrichtung der oben schon beschriebenen Art, sowie eine Spüleinrichtung zum Durchspülen des Prozessraums der Formherstellungsvorrichtung mit einem Spülgas. Ferner kann das Wechselmodul auch weitere bis alle Merkmale enthalten, die oben in Bezug auf die Wechselmodule als diesen zugehörig beschrieben worden sind.

Die Formherstellungsvorrichtung kann nach einer Ausführungsform mit mehreren gleichartigen Wechselmodulen für unterschiedliche Werkstoffpulver ausgestattet sein, wobei diese Wechselmodule untereinander austauschbar in die Formherstellungsvorrichtung integrierbar sind.

Die Erfindung wird nachstehend unter Bezugnahme auf die Zeichnungen anhand eines Ausführungsbeispiels näher erläutert.
- Figur 1: zeigt eine Formherstellungsvorrichtung der hier betrachteten Art in ihrem grundsätzlichen Aufbau mit einem in Anschlussstellung befindlichem Wechselmodul, welches noch nicht erfindungsgemäß mit einer Gasspüleinrichtung ausgestattet ist.
- Figur 2: zeigt die Vorrichtung aus Figur 1 mit einem in einer Trennstellung von der Formherstellungsvorrichtung separierten Wechselmodul.
- Figur 3a - 3c: zeigen das Wechselmodul aus Figur 1 und Figur 2 in einer Vorderansicht, Seitenansicht und Rückansicht.
- Figur 4: zeigt in einer schematischen Schnittdarstellung die pulverführenden bzw. gasführenden Hauptkomponenten des Wechselmoduls in einer der definierten Anschlussstellung angenäherten Position an einem Prozessraum.
- Figur 5: zeigt in einer Schnittdarstellung ähnlich der Schnittdarstellung gemäß Figur 4 die pulverführenden bzw. gasführenden Hauptkomponenten eines Wechselmoduls einer Formherstellungsvorrichtung nach der Erfindung mit Gasspüleinrichtung in einer der definierten Anschlussstellung angenäherten Position an einen Prozessraum.
- Figur 6: zeigt in einer Rückansicht ähnlich der Ansicht gemäß Figur 3c ein Wechselmodul nach der Erfindung, welches die in Figur 5 dargestellten Komponenten enthalten kann.

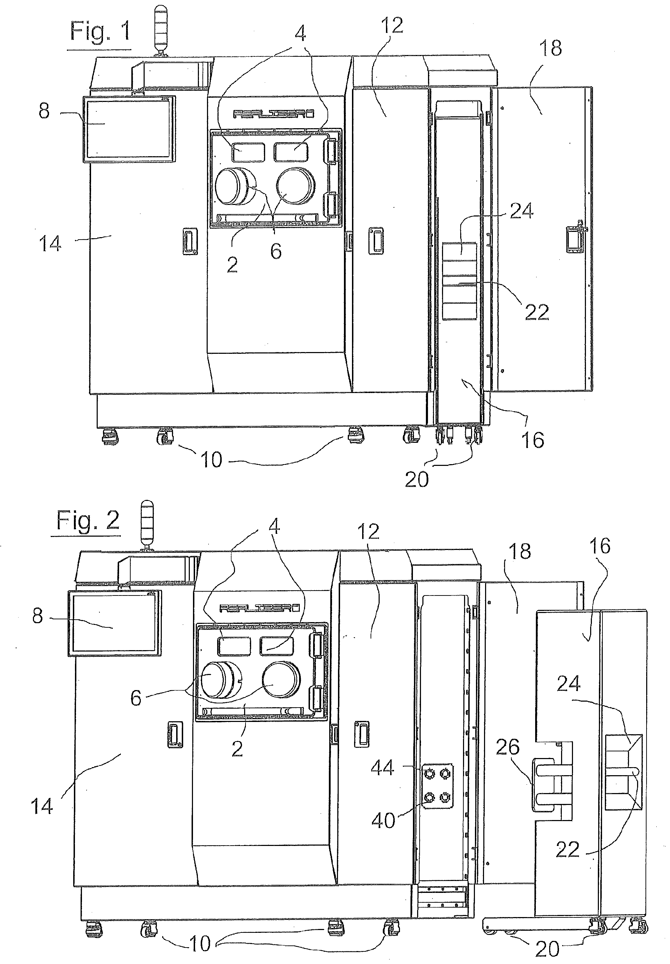

Gemäß Figur 1 und Figur 2 umfasst die Formherstellungsvorrichtung in ihrem grundsätzlichen Aufbau ein Gehäuse für diverse Komponenten, unter anderem für einen Prozessraum, der eine vordere Prozessraumtür 2 aufweist, in der zwei Beobachtungsfenster 4 und zwei Durchgriffe 6 vorgesehen sind, wobei diese Durchgriffe 6 von in den Figuren nicht erkennbaren Eingriffshandschuhen nach außen abgedichtet sind (Glove-Box-Prinzip). Die Prozessraumtür 2 kann nach Abschluss eines Bauprozesses geöffnet werden, um den hergestellten Formkörper mitsamt einer Substratplatte, auf welcher der Formkörper aufgebaut worden ist, aus dem Prozessraum herausnehmen zu können.

Ein Flachbildschirm 8 dient zur visuellen Anzeige diverser Informationen und ggf. auch zur Übertragung eines mittels einer Videokamera aufgenommenen Bildes des Inneren des Prozessraums. Das Gehäuse der Formherstellungsvorrichtung steht auf Laufrollen 10 auf, so dass die Formherstellungsvorrichtung somit leicht manövriert werden kann. Hinter den Gehäusetüren 12, 14 befinden sich diverse Komponenten der Formherstellungsvorrichtung, wie etwa Prozessrechner, Schutzgasflaschen, Stromversorgungskomponenten für die Laservorrichtung zum selektiven Laserschmelzen usw.. Das Gehäuse enthält ferner eine Bestrahlungseinrichtung zum selektiven Umschmelzen des Werkstoffpulvers. Die grundsätzliche Vorgehensweise beim Aufbauen eines Formkörpers nach der Methode des selektiven Laserschmelzens kann den eingangs genannten Dokumenten zum Stand der Technik entnommen werden, deren Inhalt insoweit durch Bezugnahme hierin aufgenommen sein soll.

Bei dem schichtweisen Aufbauen eines Formkörpers aus Werkstoffpulver fällt üblicherweise in jeder Pulverschicht Pulvermaterial an, welches nicht in dem Bereich liegt, der Teil des Formkörpers wird und daher als überschüssiges Pulvermaterial übrig bleibt. Ferner fällt auch bei der Präparation jeder einzelnen Pulverschicht auf vorausgehend darunter präparierten Pulverschichten bzw. auf der Basis-Bauplatte überschüssiges Werkstoffpulver an, welches im Rahmen der vorliegenden Erfindung der Wiederaufbereitung in dem Wechselmodul zugeführt wird.

Das Wechselmodul 16 ist in Figur 1 in seiner Anschlussstellung im Gehäuse der Formherstellungsvorrichtung dargestellt, wobei die dem Aufnahmeraum für das Wechselmodul 16 zugeordnete Abschlusstür 18 im geöffneten Zustand gezeigt ist.

Auch das Wechselmodul 16 steht auf Laufrollen 20, so dass es auf einfache Weise aus der in Figur 1 gezeigten definierten Anschlussstellung herausgezogen und in eine Trennstellung überführt werden kann, wie dies z. B. in Figur 2 dargestellt ist. Eine Griffstange 22 in einer Ausnehmung 24 im Gehäuse des Wechselmoduls 16 erlaubt das Einschieben des Wechselmoduls 16 in die Anschlussstellung und das Herausziehen des Wechselmoduls 16 aus der Anschlussstellung auf einfache Weise.

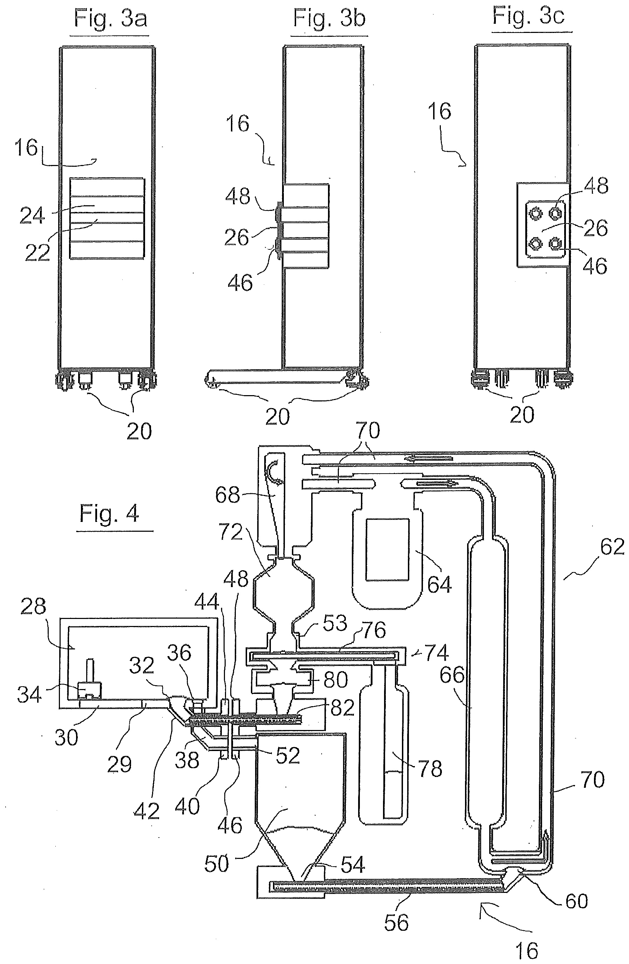

In Figur 2, Figur 3b und Figur 3c ist bei 26 eine Anschlussschnittstellengruppe schematisch angedeutet. Diese Anschlussschnittstellengruppe 26 kommt beim Einschieben des Wechselmoduls 16 in die definierte Anschlussstellung automatisch in eine Anschlusskonfiguration, so dass die einander zugeordneten Anschlussschnittstellen des Wechselmoduls 16 und der Formherstellungsvorrichtung im Übrigen automatisch korrekt aneinander angeschlossen werden. Es können mechanische Führungen vorgesehen sei, die das Wechselmodul 16 beim Einschieben in das Gehäuse in die Anschlussstellung führen. Vorzugsweise sind auch Verriegelungsmittel, beispielsweise elektromagnetische Verriegelungsmittel (nicht gezeigt) vorgesehen, die das Wechselmodul bei Annäherung an die Anschlussstellung anziehen und in der Anschlussstellung festhalten.

In Figur 4 sind die im Wesentlichen internen gas- bzw. pulverführenden Komponenten des Wechselmoduls 16 in einer der definierten Anschlussstellung des Wechselmoduls 16 angenäherten Position relativ zur Formherstellungsvorrichtung im Übrigen dargestellt, wobei die Formherstellungsvorrichtung im Übrigen durch den schematisch angedeuteten Prozessraum in Figur 4 repräsentiert ist, da zur Erläuterung der gezeigten Formherstellungsvorrichtung die weiteren Komponenten der Formherstellungsvorrichtung, wie etwa die Bestrahlungseinrichtung usw., keine Rolle spielen.

In dem Prozessraum 28 befindet sich eine in an sich bekannter Weise schrittweise in einem Bauzylinder oder dgl. absenkbare Bauplattform 30, auf welcher ein Formkörper nach und nach aus Werkstoffpulverschichten durch ortsselektives Bestrahlen der jeweiligen Schicht aufgebaut wird. Jede Pulverschicht wird in den Bereichen umgeschmolzen, die den der jeweiligen Schicht zugeordneten Querschnittsbereichen des Formkörpers entsprechen. Zur Präparation einer nachfolgend zu bestrahlenden Werkstoffpulverschicht wird dem Prozessraum 28 Werkstoffpulver über einen Pulvereinlass 32 im Prozessraumboden zugeführt. Ein Glättungsschieber, der in Figur 4 bei 34 angedeutet ist, kann gemäß Figur 4 von links nach rechts und rechts nach links hin- und herbewegt werden, um Werkstoffpulver, welches am Pulvereinlass 32 in den Prozessraum 28 eingebracht wird, mitzunehmen und über der Bauplattform 30 bzw. einer aus einem vorausgegangen Pulverpräparationsschritt hinterlassenen und bereits bestrahlten Pulverschicht glatt zu ziehen, so dass eine neue Pulverschicht für den nächsten Bestrahlungs- und Umschmelzprozess auf diese Weise präpariert wird. Der Glättungsschieber 34 kann zumindest bei seiner Bewegung nach rechts in Figur 4 kurz vor Erreichen des Pulvereinlasses 32 gesteuert angehoben und nach Überstreichen des Pulvereinlasses 32 wieder abgesenkt werden, so dass er eine jeweilige über den Prozessraumboden 29 nach oben hin hervorstehende Menge an Werkstoffpulver bei seiner Bewegung nach links in Figur 4 mitnehmen kann, um damit die nächste Pulverschicht präparieren zu können. Dabei anfallendes überschüssiges Werkstoffpulver kann der Glättungsschieber 34 in entsprechender Weise wieder bei seiner Bewegung nach rechts mitnehmen und vor sich herschieben, so dass dieses überschüssige Pulver in den vorzugsweise schlitzförmigen Pulverauslass 36 gelangen kann, der ebenfalls in dem Prozessraumboden 29 vorgesehen ist. Der Glättungsschieber 34 oder zumindest Elemente des Glättungsschiebers 34, die mit Werkstoffpulver in Kontakt kommen oder zu Pulveranhaftungen neigen, sind vorzugsweise leicht auswechselbar.

Der Pulverauslass 36 ist über ein Verbindungsleitungsstück 38 mit einer Anschlussschnittstelle 40 verbunden. Der Pulvereinlass 32 ist über einen Verbindungsleitungsabschnitt 42 mit einer Anschlussschnittstelle 44 verbunden. Wie in Figur 4 erkennbar, ist die dem Pulverauslass 36 zugeordnete Anschlussschnittstelle 40 mit einer Eingangsschnittstelle 46 des Wechselmoduls 16 verbindbar, wohingegen die dem Pulvereinlass 32 zugeordnete Anschlussschnittstelle 44 mit einer Ausgangsschnittstelle 48 gleichzeitig verbindbar ist, wenn das Wechselmodul 16 in die definierte Anschlussstellung überführt wird. In Figur 4 ist ein Zustand kurz vor Erreichen der Anschlussstellung gezeigt.

An der Eingangsschnittstelle 46 ist ein Auffangbehälter 50 in dem Wechselmodul 16 angeschlossen, der einen Haupttank mit relativ großem Aufnahmevolumen für Werkstoffpulver darstellt. Der der Eingangsschnittstelle 46 nachgeschaltete Eingang 52 des Auffangbehälters 50 befindet sich an dessen höchster Stelle, wohingegen sich ein Ausgang 54 an der tiefsten Stelle des Auffangbehälters 50 befindet, und zwar in einem sich konisch nach unten hin verjüngenden Bereich des Auffangbehälters 50. Der Ausgang 54 des Auffangbehälters 50 mündet in eine Schneckenfördereinrichtung 56, welche Pulver, das den Auffangbehälter 50 an dessen Auslass 54 verlässt, in Richtung nach rechts in Figur 4 zu einer Pulverzuführung 60 einer Gasstrom-Fördereinrichtung 62 transportiert.

Die Gasstrom-Fördereinrichtung 62 umfasst einen Gaskreislauf mit einer den Gasstrom fördernden Pumpe 64, einem der Pumpe 64 nachgeschalteten Puffer 66 und einem Zyklonabscheider 68. Die genannten Komponenten der Gasstrom-Fördereinrichtung sind durch Gasstrom-Leitungselemente 70 zu einem Kreislauf miteinander verbunden.

Im Förderbetrieb der Gasstrom-Fördereinrichtung 62 nimmt der durch Pfeile angedeutete Gasstrom das an der Pulverzuführung 60 anstehende Werkstoffpulver jeweils mit und führt dieses zum Zyklonabscheider 68, um es aus dem Gasstrom auszuscheiden. Die Pumpe 64 sorgt für die Aufrechterhaltung des Gasstromes.

Das von dem Zyklonabscheider 68 abgeschiedene Werkstoffpulver gelangt über einen Zwischentank 72 zu einer Pulverwiederaufbereitungsvorrichtung 74 in Gestalt einer Ultraschall-Siebvorrichtung 76, bei der Grobbestandteile des zugeführten Werkstoffpulvers abgefangen und in einen Behälter 78 abgeleitet werden. Das in dem Behälter 78 angesammelte Pulver wird in seiner grobkörnigen Form normalerweise nicht weiter zur Formherstellung in der Formherstellungsvorrichtung verwendet.

Das feinkörnigere Pulver, welches die Siebvorrichtung 76 passiert, gelangt in einen Zwischentank 80, aus dem heraus es einer Schneckenfördereinrichtung 82 zugeführt wird, welche das durch den Siebvorgang wiederaufbereitete Werkstoffpulver dem Pulvereinlass 32 des Prozessraums zuführt.

Nicht dargestellt in den Figuren sind automatische Abdichtmittel, welche die Schnittstellen 40, 44, 46, 48 vorzugsweise selbsttätig nach außen hin abdichten, sobald das Wechselmodul 16 aus der definierten Anschlussstellung herausbewegt wird. In der Gasfördereinrichtung 62 wird vorzugsweise Schutzgas, insbesondere Argon, mittels der Pumpe 64 in Umlauf gepumpt.

Nachfolgend wird ein Beispiel einer erfindungsgemäßen Formherstellungsvorrichtung mit Gasspüleinrichtung zum Durchspülen des Prozessraums mit Spülgas unter Bezugnahme auf die Figuren 5 und 6 erläutert. Dieses Beispiel der Erfindung umfasst sämtliche Merkmale der bereits unter Bezugnahme auf die Figuren 1 - 4 erläuterten Formherstellungsvorrichtung, wobei zu deren Kennzeichnung jeweils die selben Bezugszeichen in den Figuren verwendet wurden. Es kann somit zur Erläuterung der betreffenden Merkmale auf die vorausgegangene Beschreibung der Formherstellungsvorrichtung aus den Figuren 1 - 4 Bezug genommen werden. Im Folgenden werden unter Bezugnahme auf die Figuren 5 und 6 die hinzugekommenen Merkmale des erfindungsgemäßen Ausführungsbeispiels erläutert.

Ein wesentlicher Aspekt der Erfindung in einer Ausprägung, wie sie in den Figuren 5 - 6 repräsentiert, ist die Anordnung sämtlicher im Zusammenhang mit einem Bauprozess zur Herstellung eines Formkörpers von Werkstoffpulver kontaminierter Filterkomponenten, Pumpenkomponenten und Sammel- bzw. Vorratsbehälter für Pulver vorzugsweise in einem gemeinsamen Wechselmodul unterzubringen, so dass nach vollständigem Abschluss eines Bauprozesses im Wesentlichen sämtliches Werkstoffpulver in dem Wechselmodul hinterlassen und mit dem Wechselmodul von der Formherstellungsvorrichtung im Übrigen entfernt werden kann. Es soll damit erreicht werden, dass die Formherstellungsvorrichtung im Übrigen und insbesondere der Prozessraum sowie die vom Prozessraum zu den Anschlussschnittstellen für das betreffende Wechselmodul führenden und im Zusammenhang mit der Herstellung eines Formkörpers ggf. mit Pulverteilchen in Kontakt kommenden Leitungen bedarfsweise einfach und schnell gereinigt und somit für einen nächsten Bauprozess zur Herstellung eines Formkörpers aus einem ggf. anderen Werkstoffpulver vorbereitet werden können. Es könnte dann ohne große Verzögerung ein anderes Wechselmodul mit dem betreffenden anderen Werkstoffpulver zum Einsatz in der Formherstellungsvorrichtung kommen.

Der Prozessraum 28 ist dazu eingerichtet, dass er während eines Bauprozesses von einem Schutzgas, beispielsweise Argon, kontinuierlich durchspült wird und hierzu in einen Schutzgaskreislauf integriert ist. Zu den Komponenten dieses Schutzgaskreislaufs gehört ein aus dem Prozessraum 28 herausführendes Leitungsstück 90 mit einer außenliegenden Anschlussschnittstelle 92 für eine damit anschlusskompatible Anschlussschnittstelle 94 des Wechselmoduls 16a. In Bezug auf das Wechselmodul 16a ist die Anschlussschnittstelle 94 eine Eingangsschnittstelle, von welcher aus ein erstes Leitungsstück 96 zu einem Vorfilter 98 führt, um aus dem Prozessraum 28 abgesaugtes Schutzgas von grobkörnigeren Kontaminationsteilchen, wie etwas Pulverkörnchen, Kondensatkonglomerat, Staubteilchen oder dgl. zu befreien. Ausgangsseitig ist der Vorfilter 98 über eine Leitung 100 mit einem Feinfilter, z.B. HEPA-Filter verbunden, welcher dazu dient, Feinstteilchen, welche den Vorfilter passiert haben, aus dem Schutzgaskreislauf auszufiltern. Der Feinfilter ist ausgangsseitig mit einer Gasförderpumpe 104 verbunden, welche dazu dient, den Gasstrom im Schutzgaskreislauf aufrecht zu erhalten. Die Pumpe 104 ist über eine Leitung 106 mit einer Ausgangsschnittstelle 108 verbunden, welche anschlusskompatibel mit einer Gaseinlassschnittstelle 110 für die Schutzgaszufuhr zum Prozessraum 28 ist. Ein Leitungsstück 112 verbindet die Schnittstelle 110 mit dem Inneren des Prozessraums 28. Auch die einander zugeordneten Anschlussschnittstellen 92, 94 bzw. 108, 110 werden automatisch in der korrekten Weise und nach außen hin abgedichtet miteinander verbunden, sobald das Wechselmodul in seine definierte Anschlussstellung in der Formherstellungsvorrichtung einrückt.

In Vorbereitung auf einen Bauprozess können dann der Prozessraum nach Schließen seiner Prozessraumtür und die weiteren Komponenten 90 bis 112 des Schutzgaskreislaufs zunächst evakuiert werden. Hierzu kann die Pumpe 104 als Evakuierungspumpe genutzt werden, wozu dann mittels Einstellung einer Ventilanordnung (nicht gezeigt) am Pumpenausgang dafür Sorge getragen werden muss, dass die geförderte Luft nach außen abgezweigt wird. Ist die Evakuierung des Schutzgaskreislaufs hinreichend weit fortgeschritten, so kann durch Änderung der Ventileinstellungen zunächst ein Vorrat an Schutzgas aus einer Schutzgasquelle (z.B. aus einer Druckflasche) in den Schutzgaskreislauf eingebracht werden, wobei das Schutzgas schließlich nach entsprechender Einstellung der Ventilanordnung mittels der Pumpe 104 im Umlauf im Schutzgaskreislauf umgewälzt werden kann. Die Umwälzung des Schutzgases im Schutzgaskreislauf erfolgt während der Durchführung eines Bauprozesses. Bei diesem Bauprozess kann Prozessrauch entstehen, welcher kondensiert und Festteilchen hinterlässt, die vom Schutzgasstrom mitgenommen werden. Auch ggf. aufgewirbelte Pulverkörner können in den Schutzgaskreislauf gelangen und ebenso das Schutzgas kontaminieren. Wie erwähnt, dienen die Filter 98, 102 dazu, derartige Verunreinigungen aus dem Schutzgas heraus zu filtern, so dass das gereinigte Schutzgas schließlich wieder in den Prozessraum 28 zurückgeführt werden kann.

Mit 114 ist in Figur 5 ein flexibler Schlauch einer Pulverabsaugvorrichtung gekennzeichnet, der im Prozessraum 28 vorgesehen ist, um damit Werkstoffpulver insbesondere nach Fertigstellung eines Formkörpers aus dem Prozessraum mit einem Schutzgasstrom abzusaugen. Dabei kann es sich um überschüssiges Pulver handeln, welches auf der Bauplattform den hergestellten Formkörper umgibt oder um sonstiges Werkstoffpulver, welches noch im Prozessraum 28 oder in den Verbindungsleitstücken 38 bzw. 42 verblieben ist. Der Absaugschlauch kann von einer Bedienungsperson auch bei noch geschlossener Prozessraumtür 2 von Hand geführt werden. Die Bedienungsperson kann hierzu durch die Handschuheingriffsöffnungen 6 (vgl. Figur 1 und 2) hindurch in die daran abgedichteten Handschuhe eingreifen und damit den Absaugschlauch 114 ergreifen und bewegen. Der Absaugschlauch 114 ist über ein Verbindungsleitstück 116 mit einer außenliegenden Ausgangsschnittstelle 118 verbunden, die ihrerseits anschlusskompatibel mit einer komplementären Schnittstelle 120 am Wechselmodul 16a ist. Die Schnittstelle 120 am Wechselmodul 16a ist über eine Leitung 122 im Wechselmodul 16a mit einer in Figur 5 im Hintergrund befindlichen und nicht erkennbaren Pumpe zur Aufrechterhaltung des Schutzgasstroms verbunden, der ein Pulverabscheider, vorzugsweise Zyklonabscheider (ebenfalls in Figur 5 nicht erkennbar) vorgeschaltet ist. Das von dem Pulverabscheider aus dem Schutzgasstrom abgeschiedene Pulver gelangt in den Haupttank 50 und kann somit bei einem Bauprozess eines nächsten Formkörpers verwendet werden. Das Schutzgas wird über entsprechende Leitungen mit betreffenden Anschlusschnittstellen 12 in den Prozessraum 28 zurückgeführt. Die an dem Absaugschlauch 114 angeschlossene Pumpe und der nachgeschaltete Abscheider können von der Bauart der Pumpe 64 und des Abscheiders 68 sein. Der Absaugschlauch 114 ist schnell und leicht auswechselbar. Gemäß einer Variante der Pulverabsaugvorrichtung kann der Pulverabsaugschlauch als dehnbarer bzw. stülpbarer Schlauch an der entsprechend ausgestalteten Leitung 122 so angeordnet sein, dass er ebenfalls Komponente des Wechselmoduls 16a ist und durch die Schnittstelle 118 hindurch in den Prozessraum 28 eingeführt bzw. aus diesem vorzugsweise nach außen abgedichtet herausgezogen werden kann. Der Pulverabsaugschlauch verbleibt in diesem Fall am Wechselmodul, wenn dieses aus seiner Anschlussstellung entfernt wird. Der grundsätzliche Aufbau und die Funktionsweise einer Pulverabsaugeinrichtung sind bekannt, so z.B. aus der bereits erwähnten EP 2 052 845 A2.

Bei dem Ausführungsbeispiel gemäß Figur 5 sind ebenfalls sämtliche kritisch vom Pulver zu reinigenden Komponenten der Pulverabsaugvorrichtung in dem Wechselmodul 16a vorgesehen, so dass nach einem hinreichend sorgfältigen Pulverabsaugvorgang unter Verwendung des Pulverabsaugschlauchs 114 auch insoweit im Wesentlichen sämtliches Pulver im Wechselmodul 16a ist. Sämtliche mit Pulver in Kontakt kommenden Elemente der Formherstellungsvorrichtung im Übrigen, insbesondere der Prozessraum 28, sind dann sehr einfach schnell und gründlich zu reinigen und somit für einen nächsten Bauprozess mit ggf. anderem Werkstoffpulver unter Einsatz eines anderen Wechselmoduls bereit.

In Figur 6 sind noch eine Stromversorgungsschnittstelle 130 und eine Datenleitungsschnittstelle 132 an dem Wechselmodul 16a angedeutet, die mit einer entsprechend anschlusskompatiblen Stromversorgungsschnittstelle und Datenleitungsschnittstelle der Formherstellungsvorrichtung im Übrigen automatisch in korrekter Anschlusskonfiguration gelangen, wenn das Wechselmodul 16a in seine definierte Anschlussstellung in der Formherstellungsvorrichtung gelangt. Über die Stromversorgungsschnittstelle 130 und daran angeschlossene Leitungen werden die elektrischen Verbraucher des Wechselmoduls 16a, wie Pumpen, Förderschnecken, Siebeinrichtungen usw. mit elektrischer Energie versorgt.

Die Datenleitungsschnittstelle 132 steht mit einer elektronischen Datenverarbeitungseinrichtung im Wechselmodul 16a in Verbindung, in welcher Kenndaten des Wechselmoduls und ggf. weitere Informationen gespeichert sind.

An der Formherstellungsvorrichtung ist eine mit der Datenleitungsschnittstelle 132 anschlusskompatible Datenleitungsschnittstelle vorgesehen, die über betreffende Datenübertragungsleitungen mit einer Steuereinrichtung der Formherstellungsvorrichtung verbunden ist. Nach Herstellung einer Datenübertragungsverbindung zwischen diesen Datenleitungsschnittstellen kann die Steuereinrichtung der Formherstellungsvorrichtung Daten aus der Datenverarbeitungseinrichtung des Wechselmoduls 16a auslesen und sich auf Besonderheiten einstellen, die für den Betrieb mit dem betreffenden Wechselmodul 16a zu beachten sind. Diese Besonderheiten können insbesondere die Bauprozesssteuerung in Abhängigkeit von dem im Wechselmodul bevorrateten Werkstoffpulver usw. betreffen.

Gemäß einer alternativen Ausführungsform kann es vorgesehen sein, dass die Datenübertragung zwischen der Datenverarbeitungseinrichtung des Wechselmoduls und der Steuereinrichtung der Formherstellungsvorrichtung kabellos, etwa per Funk oder modulierter IR-Strahlung oder dgl. erfolgt.

An dem Prozessraum kann ggf. eine Schleuse vorgesehen sein, die die Entnahme oder das Einbringen von Gegenständen aus dem Prozessraum bzw. in den Prozessraum ermöglicht, ohne die Schutzgasatmosphäre in dem Prozessraum zu zerstören.

## Patentansprüche

1. Formherstellungsvorrichtung zur Herstellung von Formkörpern durch ortsselektives Verfestigen von Werkstoffpulver zu zusammenhängenden Bereichen, umfassend
- einen Prozessraum (28) mit einem Pulvereinlass (32) für zu verarbeitendes Werkstoffpulver und einem Pulverauslass (36) für überschüssiges Werkstoffpulver,
- eine an dem Pulvereinlass (32) angeschlossene oder anschließbare Pulverversorgungseinrichtung (80, 82) zur Bereitstellung von Werkstoffpulver in dem Prozessraum (28) und
- eine an dem Pulverauslass (36) angeschlossene oder anschließbare Pulverwiederaufbereitungseinrichtung (74) zur Rückgewinnung von zu verarbeitendem Werkstoffpulver aus dem überschüssigen Werkstoffpulver, wobei
die Pulverversorgungseinrichtung (80, 82) und die Pulverwiederaufbereitungseinrichtung (74) zu einer als Wechselmodul (16; 16a) ausgestatteten Baugruppe zusammengefasst sind, welches Anschlussschnittstellen, nämlich wenigstens eine Eingangsschnittstelle (46) und wenigstens eine Ausgangsschnittstelle (48) aufweist, die anschlusskompatibel mit betreffenden Anschlussschnittstellen (40, 44) des Pulvereinlasses (32) und des Pulverauslasses (36) des Prozessraumes (28) sind, so dass einerseits überschüssiges Pulver aus dem Prozessraum (28) durch dessen Pulverauslass (36) hindurch der Pulverwiederaufbereitungseinrichtung (74) durch die wenigstens eine Eingangsschnittstelle (46) zugeführt werden kann und andererseits von der Pulverwiederaufbereitungseinrichtung (74) aufbereitetes Werkstoffpulver durch die wenigstens eine Ausgangsschnittstelle (48) dem Prozessraum (28) durch dessen Pulvereinlass (32) hindurch zugeführt werden kann, wobei die Formherstellungsvorrichtung ferner eine Spüleinrichtung zum Durchspülen des Prozessraums (28) mit einem Spülgas, vorzugsweise Schutzgas umfasst, welche folgende Merkmale aufweist:
einen Gaseinlass zum Einlassen des Spülgases in den Prozessraum (28), einen Gasauslass zum Ableiten von Spülgas aus dem Prozessraum (28), eine dem Gasauslass nachgeschaltete Filteranordnung (98,102) und eine in Reihenschaltung mit der Filteranordnung (98,102) und vorzugsweise ausgangsseitig der Filteranordnung (98,102) angeordnete Gasfördereinrichtung (104), insbesondere Pumpe,
ein Gasleitungssystem, welches den Gasauslass, die Filteranordnung (98,102) und die Gasfördereinrichtung (104) umfasst,
wobei die Filteranordnung (98,102) und die Gasfördereinrichtung (96) in einem Wechselmodul (16a) untergebracht sind, welches vorzugsweise identisch ist mit dem Wechselmodul (16a), welches die Pulverversorgungseinrichtung (80, 82) und die Pulverwiederaufbereitungseinrichtung (74) umfasst, und wobei das Gasleitungssystem eine dem Gasauslass zugeordnete prozessraumseitige Anschlussschnittstelle (92) und eine damit lösbar verbundene bzw. verbindbare wechselmodulseitige Anschlussschnittstelle (94) umfast, wobei das Wechselmodul (16a) aus einer Trennstellung heraus in eine definierte Anschlussstellung überführbar ist, so dass es in der Anschlussstellung so in die Formherstellungsvorrichtung integriert ist, dass die Anschlusschnittstellen (92, 94) des Gasleitungssystems aneinander angeschlossen- oder anschließbar sind.

2. Formherstellungsvorrichtung nach Anspruch 1, wobei das Gasleitungssystem eine der Gasfördereinrichtung (104) und der Filteranordnung in Reihe nachgeschaltete wechselmodulseitige Anschlussschnittstelle (108) und eine damit in der definierten Anschlussstellung des Wechselmoduls (16a) lösbar verbundene bzw. verbindbare, dem Gaseinlass des Prozessraums (28) zugeordnete prozessraumseitige Anschlussschnittstelle (110) umfasst und dazu eingerichtet ist, in der definierten Anschlussstellung des Wechselmoduls (16a) einen den Prozessraum (28) umfassenden Spülgaskreislauf zu bilden, so dass im Spülbetrieb der Spüleinrichtung die Gasfördereinrichtung (104) Spülgas im Umlauf im Spülgaskreislauf fördern kann und das Spülgas dabei die Filteranordnung (98,102) durchströmt, um von Verunreinigungen befreit zu werden.

3. Formherstellungsvorrichtung nach Anspruch 1 oder 2, wobei, das Wechsel-modul (16a) aus einer Trennstellung heraus in eine definierte Anschlussstellung überführbar ist, wobei es in der Anschlussstellung so in die Formherstellungsvorrichtung integriert ist, dass die einander zugeordneten Anschlussschnittstellen (40, 44, 46, 48) aneinander angeschlossen- oder anschließbar sind.

4. Formherstellungsvorrichtung nach Anspruch 3, wobei die Anordnung so getroffen ist, dass alle einander zugeordneten Anschlussschnittstellen (40, 44, 46, 48) beim Übergang des Wechselmoduls (16a) von der Trennstellung in die Anschlussstellung automatisch korrekt aneinander angeschlossen werden.

5. Formherstellungsvorrichtung nach wenigstens einem der Ansprüche 1 bis 4, wobei die Pulverwiederaufbereitungseinrichtung (74) in dem Wechselmodul (16a) eine Siebvorrichtung (76), vorzugsweise eine mittels Ultraschall zu Rüttelschwingungen anregbare Ultraschall-Siebvorrichtung, zum Abfangen von Grobbestandteilen aus überschüssigem Werkstoffpulver aus dem Prozessraum (28) aufweist, und wobei die Siebvorrichtung (76) ausgangsseitig an der Ausgangsschnittstelle (48) ggf. unter Zwischenschaltung eines Pufferbehälters (80) angeschlossen oder anschließbar ist, so dass gesiebtes Werkstoffpulver durch die Ausgangsschnittstelle (48) hindurch dem Pulvereinlass (32) des Prozessraumes (28) als zu verarbeitendes Werkstoffpulver zuführbar ist.

6. Formherstellungsvorrichtung nach Anspruch 5, wobei der Siebvorrichtung (76) Fördermittel (82) zum Fördern von gesiebtem Pulver zum Pulvereinlass (32) des Prozessraums (28) nachgeschaltet sind.

7. Formherstellungsvorrichtung nach wenigstens einem der Ansprüche 1 bis 6, wobei das Wechselmodul (16a) einen der Eingangsschnittstelle (46) nachgeschalteten Pulverauffangbehälter (50) zur Aufnahme von überschüssigem Werkstoffpulver (51) aus dem Prozessraum (28) aufweist.

8. Formherstellungsvorrichtung nach Anspruch 7, wobei der Pulverauffangbehälter (50) einen Pulverauslass (54) aufweist und wobei zwischen dem Pulverauslass (54) des Pulverauffangbehälters (50) und einem Pulvereinlass (53) der Pulverwiederaufbereitungs-einrichtung (74) eine Fördereinrichtung (62) zur Förderung von Werkstoffpulver (51) vom Pulverauffangbehälter (50) zur Pulverwiederaufbereitungseinrichtung (74) vorgesehen ist.

9. Formherstellungsvorrichtung nach Anspruch 8, wobei die Fördereinrichtung (62) zur Förderung von Werkstoffpulver vom Pulverauffangbehälter (50) zur Pulverwiederaufbereitungseinrichtung (74) eine Gasstrom-Fördereinrichtung, vorzugsweise Schutzgasstrom-Fördereinrichtung, und besonders bevorzugt eine Gasstrom-Fördereinrichtung mit einem Gasstromkreislauf, umfasst, welche dazu eingerichtet ist, Pulverpartikel mittels eines Gasstromes zu fördern, wobei die Gasstrom-Fördereinrichtung (62) einen Abscheider (68), vorzugsweise Zyklonabscheider, aufweist, der dazu eingerichtet ist, Pulverpartikel aus dem Gasstrom abzuscheiden und der Pulverwiederaufbereitungseinrichtung (74) zuzuführen.

10. Formherstellungsvorrichtung nach wenigstens einem der Ansprüche 1 bis 9, wobei der Pulverauslass (36) des Prozessraumes (28) oder/und der Pulvereinlass (32) des Prozessraums (28) im Prozessraumboden (29) münden.

11. Formherstellungsvorrichtung nach wenigstens einem der Ansprüche 1 bis 10, wobei sie eine Schutzgasfördereinrichtung umfasst und wobei sämtliche von Pulver durchflossenen Komponenten des Wechsel-moduls (16a) mittels der Schutzgasfördereinrichtung mit Schutzgas, z.B. Argon, spülbar sind, so dass die Komponenten unter Schutzgasatmosphäre betreibbar sind.

12. Formherstellungsvorrichtung nach wenigstens einem der Ansprüche 1 bis 11, wobei mehrere gleichartige Wechselmodule (16a) vorzugsweise für unterschiedliche Werkstoffpulvermaterialien vorhanden sind, wobei die Wechselmodule (16a) untereinander austauschbar mit der Formherstellungsvorrichtung in definierter Anschlussstellung kombinierbar sind.

13. Formherstellungsvorrichtung nach einem der vorhergehenden Ansprüche, umfassend eine Absaugvorrichtung zum Absaugen von restlichem Werkstoffpulver aus dem Prozessraum (28) mittels eines Gasstroms nach Beendigung oder vor Beginn eines Bauprozesses, wobei die Absaugvorrichtung ein in dem Prozessraum (28) vorgesehenes oder einbringbares Absaughandhabungsmittel (114), vorzugsweise in Gestalt eines flexiblen Schlauches, und eine daran angeschlossene Förderpumpe zur Erzeugung des Gasstroms und einen Abscheider zum Abscheiden von Werkstoffpulver aus dem Gasstrom umfasst, wobei die Förderpumpe und der Abscheider in dem Wechselmodul (16a) untergebracht sind, welches auch die Pulverversorgungseinrichtungen (80,82) und die Pulverwiederaufbereitungseinrichtung (74) enthält, wobei der Abscheider dazu eingerichtet ist, aus dem Gasstrom abgeschiedenes Werkstoffpulver der Pulverwiederaufbereitungseinrichtung (74) zukommen zu lassen.

14. Formherstellungsvorrichtung nach einem der vorhergehenden Ansprüche, wobei das Wechselmodul (16a) eine Datenverarbeitungs-einrichtung enthält, in welcher Kenndaten oder/und Zustandsdaten des Wechselmoduls (16a), wie beispielsweise Art und/oder Menge des im Wechselmodul (16a) bevorrateten Werkstoffpulvers gespeichert sind, und wobei die Formherstellungsvorrichtung eine Steuereinrichtung aufweist, die mit der Datenverarbeitungseinrichtung des Wechselmoduls (16a) in Datenübertragungsverbindung bringbar ist, um daraus Kenndaten oder/und Zustandsdaten auszulesen und diese bei der Steuerung der Formherstellungsvorrichtung zu berücksichtigen.

15. Wechselmodul (16 a) für eine Formherstellungsvorrichtung nach einem der vorhergehenden Ansprüche, umfassend
- eine Pulverversorgungseinrichtung (80,82) zur Bereitstellung von Werkstoffpulver zur Herstellung eines Formkörpers in einem Bauprozess mittels der Formherstellungsvorrichtung,
- eine Pulverwiederaufbereitungseinrichtung (74) zur Wiederaufbereitung von bei einem Bauprozess anfallendem überschüssigem Werkstoffpulver sowie
- wechselmodulseitige Komponenten einer prozessraumseitig einen Gaseinlass zum Einlass von Spülgas in den Prozessraum (28) und einen Gasauslass zum Ableiten von Spülgas aus dem Prozessraum (28) umfassende Spüleinrichtung zum Durchspülen des Prozessraums der Formherstellungsvorrichtung mit einem Spülgas, wobei die wechselmodulseitigen Komponenten
- eine Filteranordnung (98, 102),
- eine in Reihenschaltung mit der Filteranordnung (98, 102) und vorzugsweise ausgangsseitig der Filteranordnung (98, 102) angeordnete Gasfördereinrichtung (104), insbesondere Pumpe,
- wechselmodulseitige Elemente eines prozessraumseitig den Gasauslass und eine diesem zugeordnete prozessraumseitige Anschlussschnittstelle (92) aufweisenden Gasleitungssystems, wobei die wechselmodulseitigen Elemente des Gasleitungssystems die Filteranordnung (98, 102) und die Gasfördereinrichtung (104) umfassen,
- eine wechselmodulseitige Anschlussschnittstelle (94) die mit der prozessraumseitigen Anschlussschnittstelle (92) lösbar verbunden bzw. verbindbar ist, wobei das Wechselmodul (16a) aus einer Trennstellung heraus in eine definierte Anschlussstellung überführbar ist, so dass es in der Anschlussstellung so in die Formherstellung integriert ist, dass die Anschlussschnittstellen (92, 94) des Gasleitungssystems aneinander angeschlossen- oder anschließbar sind.

## Claims

1. Mould manufacturing device for the manufacture of moulded articles by locally selective solidifying of material powder to coherent areas, comprising
- a process chamber (28) with a powder inlet (32) for material powder to be treated and a powder outlet (36) for excess material powder,
- a powder supply apparatus (80, 82) connected or connectable to the powder inlet (32) for providing material powder in the process chamber (28) and
- a powder reprocessing apparatus (74) connected or connectable to the powder outlet (36) for recovering material powder to be processed from the excess material powder, wherein the powder supply apparatus (80, 82) and the powder reprocessing apparatus (74) are linked to each other to form an assembly which is arranged as an exchange module (16; 16a), which has connection interfaces, namely at least one input interface (46) and at least one output interface (48), which are connection-compatible with respective connection interfaces (40, 44) of the powder inlet (32) and the powder outlet (36) of the process chamber (28), so that, on the one hand, excess powder from the process chamber (28) can be fed through its powder outlet (36) to the powder reprocessing apparatus (74) through the at least one input interface (46) and, on the other hand, material powder processed by the powder reprocessing apparatus (74) can be fed through the at least one output interface (48) to the process chamber (28) through its powder inlet (32), wherein the mould manufacturing device further comprises a purging apparatus for purging the process chamber (28) with a purging gas, preferably inert gas, which has the following features: a gas inlet for letting the purging gas into the process chamber (28), a gas outlet for discharging purging gas from the process chamber (28), a filter arrangement (98, 102) downstream of the gas outlet and a gas conveying apparatus (104), in particular a pump, in series connection with the filter arrangement (98, 102) and preferably arranged on the outlet side of the filter arrangement (98, 102), a gas pipe system which comprises the gas outlet, the filter arrangement (98, 102) and the gas conveying apparatus (104), wherein the filter arrangement (98, 102) and the gas conveying apparatus (96) are accommodated in an exchange module (16a), which is preferably identical to the exchange module (16a) which comprises the powder supply apparatus (80, 82) and the powder reprocessing apparatus (74), and wherein the gas pipe system comprises a connection interface (92) associated with the gas outlet on the process chamber-side and a connection interface (94) on the exchange module-side removably connected or connectable thereto, wherein the exchange module (16a) can be transferred from a disconnection position into a defined connection position, so that in the connection position it is integrated into the mould manufacturing device in such a way that the connection interfaces (92, 94) of the gas pipe system can be connected or are connectable to each other.

2. Mould manufacturing device according to claim 1, wherein the gas pipe system comprises a connection interface (108) on the exchange module-side, following serially the gas conveying apparatus (104) and the filter arrangement, and a connection interface (110) on the process chamber-side, removably connected or connectable thereto in the defined connection position of the exchange module (16a) and associated with the gas inlet of the process chamber (28), and is configured to form a purge gas circuit comprising the process chamber (28) in the defined connection position of the exchange module (16a), so that in the purge operation of the purging apparatus the gas conveying apparatus (104) can convey purge gas circulating in the purge gas circuit and the purge gas thereby flows through the filter arrangement (98, 102) in order to be freed from impurities.

3. Mould manufacturing device according to claim 1 or 2, wherein the exchange module (16a) is transferable from a disconnection position into a defined connection position, wherein it is integrated into the mould manufacturing device in the connection position in such a manner that the mutually associated connection interfaces (40, 44, 46, 48) are connected or connectable to one another.

4. Mould manufacturing device according to claim 3, wherein the arrangement is such that all connection interfaces (40, 44, 46, 48) associated with one another are automatically correctly connected to one another when the exchange module (16a) moves from the disconnection position to the connection position.

5. Mould manufacturing device according to at least one of claims 1 to 4, wherein the powder reprocessing apparatus (74) in the exchange module (16a) has a screening device (76), preferably an ultrasonic screening device excitable into shaking vibrations by means of ultrasound, for intercepting coarse constituents from excess material powder from the process chamber (28), and wherein the screening device (76) is connected or connectable on the output-side to the output interface (48), if applicable with the interposition of a buffer container (80), so that screened material powder can be fed through the output interface (48) into the powder inlet (32) of the process chamber (28) as a material powder to be treated.

6. Mould manufacturing device according to claim 5, wherein the screening device (76) is followed by conveying means (82) for conveying screened powder to the powder inlet (32) of the process chamber (28).

7. Mould manufacturing device according to at least one of claims 1 to 6, wherein the exchange module (16a) has a powder collecting container (50) following the input interface (46) for receiving excess material powder (51) from the process chamber (28).

8. Mould manufacturing device according to claim 7, wherein the powder collecting container (50) has a powder outlet (54) and wherein between the powder outlet (54) of the powder collecting container (50) and a powder inlet (53) of the powder reprocessing apparatus (74) a conveying apparatus (62) is provided for conveying material powder (51) from the powder collecting container (50) to the powder reprocessing apparatus (74).

9. Mould manufacturing device according to claim 8, wherein the conveying apparatus (62) for conveying material powder from the powder collecting container (50) to the powder reprocessing apparatus (74) comprises a gas flow conveying apparatus, preferably inert gas flow conveying apparatus, and particularly preferably a gas flow conveying apparatus with a gas flow circuit, which is configured to convey powder particles by means of a gas flow, wherein the gas flow conveying apparatus (62) comprises a separator (68), preferably a cyclone separator, which is configured to separate powder particles from the gas flow and to feed them to the powder reprocessing apparatus (74).

10. Mould manufacturing device according to at least one of claims 1 to 9, wherein the powder outlet (36) of the process chamber (28) and/or the powder inlet (32) of the process chamber (28) lead into the process chamber floor (29).

11. Mould manufacturing device according to at least one of claims 1 to 10, wherein it comprises an inert gas conveying apparatus and wherein all components of the exchange module (16a) through which powder flows can be purged with inert gas, e.g. argon, by means of the inert gas conveying apparatus, so that the components can be operated under an inert gas atmosphere.

12. Mould manufacturing device according to at least one of claims 1 to 11, wherein several similar exchange modules (16a) are present preferably for different material powder materials, wherein the exchange modules (16a) can be interchangeably combined with the mould manufacturing device in a defined connection position.

13. Mould manufacturing device according to one of the preceding claims, comprising a suction device for suctioning off residual material powder from the process chamber (28) by means of a gas flow after completion or before the start of a building process, wherein the suction device comprises a suction handling means (114), preferably in the form of a flexible hose, provided or insertable in the process chamber (28), and a feed pump connected thereto for generating the gas flow and a separator for separating material powder from the gas flow, wherein the feed pump and the separator are accommodated in the exchange module (16a), which also contains the powder supply apparatus (80, 82) and the powder reprocessing apparatus (74), wherein the separator is configured to deliver material powder separated from the gas flow to the powder reprocessing apparatus (74).

14. Mould manufacturing device according to one of the preceding claims, wherein the exchange module (16a) contains a data processing apparatus in which characteristic data or/and status data of the exchange module (16a), such as, for example, the type and/or the amount of material powder stocked in the exchange module (16a), are stored, and wherein the mould manufacturing device has a control apparatus which can be brought into data transmission connection with the data processing apparatus of the exchange module (16a) to read out characteristic data and/or status data therefrom and to consider these in controlling the mould manufacturing device.

15. Exchange module (16 sa) for a mould manufacturing device according to one of the preceding claims, comprising
- a powder supply apparatus (80, 82) for providing material powder for manufacturing a moulded article in a building process by means of the mould manufacturing device,
- a powder reprocessing apparatus (74) for reprocessing excess material powder produced during a building process, and
- exchange module-side components of a purging apparatus for purging the process chamber of the mould manufacturing device with a purging gas, comprising a gas inlet for letting purging gas into the process chamber (28) and a gas outlet for discharging purging gas from the process chamber (28), wherein the exchange module-side components comprise
- a filter arrangement (98, 102),
- a gas conveying apparatus (104), in particular a pump, arranged in a series connection with the filter arrangement (98, 102) and preferably on the outlet-side of the filter arrangement (98, 102),
- exchange module-side members of a gas pipe system having on the process chamber-side the gas outlet and a process chamber-side connection interface (92) associated therewith, wherein the exchange module-side elements of the gas pipe system comprise the filter arrangement (98, 102) and the gas conveying apparatus (104),
- an exchange module-side connection interface (94) which is removably connected or connectable to the connection interface (92) on the process chamber-side, wherein the exchange module (16a) can be transferred from a disconnection position into a defined connection position, so that it is integrated into the mould manufacturing in the connection position in such a way that the connection interfaces (92, 94) of the gas pipe system are connected or connectable to one another.

## Revendications

1. Dispositif de fabrication de moule pour la production de pièces moulées par solidification sélective de poudre de matériau pour former des zones cohérentes, comprenant
- un espace de traitement (28) avec une entrée de poudre (32) pour la poudre de matériau à traiter et une sortie de poudre (36) pour la poudre de matériau en excès,
- un dispositif d'alimentation en poudre (80, 82) relié ou pouvant être relié à l'entrée de poudre (32) pour la mise à disposition de poudre de matériau dans l'espace de traitement (28), et
- un dispositif de retraitement de poudre (74) relié ou pouvant être relié à la sortie de poudre (36) pour la récupération de poudre de matériau à traiter à partir de la poudre de matériau en excès,
dans lequel
le dispositif d'alimentation en poudre (80, 82) et le dispositif de retraitement de poudre (74) sont combinés dans un composant adapté en tant que module d'échange (16 ; 16a), qui comporte des interfaces de raccordement, à savoir au moins une interface d'entrée (46) et au moins une interface de sortie (48), qui sont compatibles avec les interfaces de raccordement respectives (40, 44) de l'entrée de poudre (32) et de la sortie de poudre (36) de l'espace de traitement (28), de sorte que, d'une part, la poudre en excès provenant de l'espace de traitement (28) peut être amenée au dispositif de retraitement de poudre (74) par sa sortie de poudre (36) par l'intermédiaire de ladite au moins une interface d'entrée (46) et, que d'autre part, la poudre de matériau traitée par le dispositif de retraitement de poudre (74) peut être amenée à l'espace de traitement (28) par son entrée de poudre (32) par l'intermédiaire de ladite au moins une interface de sortie (48), dans lequel le dispositif de fabrication de moule comprend en outre un dispositif de purge pour purger l'espace de traitement (28) avec un gaz de purge, de préférence un gaz de protection, qui présente les caractéristiques suivantes :
une entrée de gaz pour l'admission du gaz de purge dans l'espace de traitement (28), une sortie de gaz pour l'évacuation du gaz de purge de l'espace de traitement (28),
un arrangement de filtrage (98, 102) monté en aval de la sortie de gaz et un dispositif de transport de gaz (104), en particulier une pompe, disposé en série avec l'arrangement de filtrage (98, 102) et de préférence du côté de la sortie de l'arrangement de filtrage (98, 102),
un système de conduite de gaz qui comprend la sortie de gaz, l'arrangement de filtrage (98, 102) et le dispositif de transport de gaz (104),
dans lequel l'arrangement de filtrage (98, 102) et le dispositif de transport de gaz (104) sont logés dans un module d'échange (16a), qui est de préférence identique au module d'échange (16a), qui comprend le dispositif d'alimentation en poudre (80, 82) et le dispositif de retraitement de poudre (74), et dans lequel le système de conduite de gaz comprend une interface de raccordement (92) associée à la sortie de gaz côté espace de traitement et une interface de raccordement (94) reliée ou pouvant être reliée de manière amovible à la sortie de gaz côté espace de traitement, dans lequel le module d'échange (16a) peut être transféré d'une position de séparation dans une position de raccordement définie, de sorte que dans la position de raccordement, il est intégré dans le dispositif de fabrication de moules de telle sorte que les interfaces de raccordement (92, 94) du système de conduite de gaz sont connectées ou peuvent être connectées entre elles.

2. Dispositif de fabrication de moule selon la revendication 1, dans lequel le système de conduite de gaz comprend une interface de raccordement (108) du côté du module d'échange, montée en série en aval du dispositif de transport de gaz (104) et de l'arrangement de filtrage, et une interface de raccordement (110) du côté de l'espace de traitement, reliée ou pouvant être reliée de manière amovible au dispositif de transport de gaz (104) dans la position de raccordement définie du module d'échange (16a) associée à l'entrée de gaz de l'espace de traitement (28), et adapté pour former un circuit de gaz de purge comprenant l'espace de traitement (28) dans la position de raccordement définie du module d'échange (16a), de sorte que lors de l'opération de purge du dispositif de purge, le dispositif de transport de gaz (104) peut transporter le gaz de purge en circulation dans le circuit de gaz de purge, le gaz de purge traversant l'arrangement de filtrage (98, 102) afin d'être libéré d'impuretés.

3. Dispositif de fabrication de moule selon la revendication 1 ou 2, dans lequel le module d'échange (16a) peut être transféré d'une position de séparation dans une position de raccordement définie, dans lequel, dans la position de raccordement, il est intégré dans le dispositif de fabrication de moule de telle sorte que les interfaces de raccordement (40, 44, 46, 48) mutuellement associées sont ou peuvent être connectées entre elles.

4. Dispositif de fabrication de moule selon la revendication 3, l'arrangement étant tel que toutes les interfaces de raccordement associées (40, 44, 46, 48) sont automatiquement correctement connectées les unes aux autres lorsque le module d'échange (16a) passe de la position de séparation à la position de raccordement.

5. Dispositif de fabrication de moule selon au moins l'une des revendications 1 à 4, dans lequel le dispositif de retraitement de poudre (74) présente dans le module d'échange (16a) un dispositif de tamisage (76), de préférence un dispositif de tamisage à ultrasons pouvant être excité en vibrations vibrantes au moyen d'ultrasons, destiné à capter les constituants grossiers de la poudre de matériau en excès provenant de l'espace de traitement (28), et dans lequel le dispositif de tamisage (76) est connecté ou peut être connecté côté sortie à l'interface de sortie (48), le cas échéant avec interposition d'un conteneur tampon (80), de telle sorte que la poudre de matériau tamisé puisse être acheminée à travers l'interface de sortie (48) vers l'entrée de poudre (32) de l'espace de traitement (28) en tant que poudre de matériau à traiter.

6. Dispositif de fabrication de moule selon la revendication 5, dans lequel des moyens de transport (82) pour le transport de la poudre tamisée vers l'entrée de poudre (32) de l'espace de traitement (28) sont montés en aval du dispositif de tamisage (76).

7. Dispositif de fabrication de moule selon au moins une des revendications 1 à 6, dans lequel le module d'échange (16a) comporte un récipient collecteur de poudre (50) monté en aval de l'interface d'entrée (46) pour recevoir la poudre de matériau en excès (51) de l'espace de traitement (28).

8. Dispositif de fabrication de moule selon la revendication 2, dans lequel le récipient collecteur de poudre (50) présente une sortie de poudre (54) et dans lequel un dispositif de transport (62) pour transporter de la poudre de matériau (51) du récipient collecteur de poudre (50) au dispositif de retraitement de poudre (74) est prévu entre la sortie de poudre (54) du récipient collecteur de poudre (50) et une entrée de poudre (53) du dispositif de retraitement de poudre (74).

9. Dispositif de fabrication de moule selon la revendication 2, dans lequel le dispositif de transport (62) pour le transport de poudre de matériau du récipient collecteur de poudre (50) au dispositif de retraitement de poudre (74) comprend un dispositif de transport à flux de gaz, de préférence un dispositif de transport à flux de gaz de protection, et de manière particulièrement préférée un dispositif de transport à flux de gaz avec un circuit de flux de gaz, qui est adapté pour transporter des particules de poudre au moyen d'un flux de gaz, dans lequel le dispositif de transport du flux de gaz (62) comprend un séparateur (68), de préférence un séparateur à cyclone, qui est adapté pour séparer les particules de poudre du flux de gaz et pour les amener au dispositif de recyclage de poudre (74).

10. Dispositif de fabrication de moule selon au moins l'une des revendications 1 à 9, dans lequel la sortie de poudre (36) de l'espace de traitement (28) et/ou l'entrée de poudre (32) de l'espace de traitement (28) débouchent dans le fond de la chambre de traitement (29).

11. Dispositif de fabrication de moule selon au moins l'une des revendications 1 à 10, **caractérisé en ce qu'**il comprend un dispositif de transport de gaz protecteur et **en ce que** tous les composants du module d'échange (16a) traversé par des flux de poudre peuvent être purgés avec un gaz protecteur, par exemple de l'argon, au moyen du dispositif de transport de gaz protecteur, de sorte que les composants peuvent fonctionner sous une atmosphère de gaz protecteur.

12. Dispositif de fabrication de moule selon au moins l'une des revendications 1 à 11, dans lequel il est prévu plusieurs modules d'échange (16a) identiques, de préférence pour des matériaux pulvérulentes différentes, dans lequel les modules d'échange (16a) peuvent être combinés de manière interchangeable entre eux avec le dispositif de fabrication de moule dans une position de raccordement définie.

13. Dispositif de fabrication de moule selon l'une des revendications précédentes, comprenant un dispositif d'aspiration pour aspirer de la poudre de matériau résiduelle de l'espace de traitement (28) au moyen d'un flux de gaz après la fin ou avant le début d'un processus de construction, le dispositif d'aspiration comprenant un moyen de manipulation d'aspiration (114), de préférence sous la forme d'un tuyau flexible, prévu ou pouvant être inséré dans l'espace de traitement (28), et une pompe d'alimentation connectée à celle-ci pour générer le flux de gaz et un séparateur pour séparer la poudre de matériau du flux de gaz, la pompe d'alimentation et le séparateur étant logés dans le module d'échange (16a), qui contient également les dispositifs d'alimentation en poudre (80, 82) et le dispositif de retraitement de la poudre (74), le séparateur étant adapté pour fournir la poudre de matériau séparée du flux de gaz au dispositif de retraitement de la poudre (74).

14. Dispositif de fabrication de moule selon l'une des revendications précédentes, dans lequel le module d'échange (16a) contient un dispositif de traitement des données dans lequel sont stockées des données caractéristiques et/ou des données d'état du module d'échange (16a), comme par exemple le type et/ou la quantité du matériau en poudre stocké dans le module d'échange (16a), et dans lequel le dispositif de fabrication de moule comprend un dispositif de commande qui peut être mis en connexion de transfert de données avec le dispositif de traitement des données du module d'échange (16a) afin de lire les données caractéristiques et/ou les données d'état de celui-ci et de les prendre en compte dans la commande du dispositif de fabrication de moule.

15. Module d'échange (16a) pour un dispositif de fabrication de moule selon l'une des revendications précédentes, comprenant
- un dispositif d'alimentation en poudre (80, 82) pour fournir de la poudre de matériau pour la production d'un corps moulé dans un processus de construction au moyen du dispositif de fabrication de moule,
- un dispositif de retraitement de poudre (74) pour le retraitement de la poudre de matériau en excès produite dans un processus de construction et
- des composants du côté du module d'échange d'un dispositif de purge comprenant du côté de l'espace de traitement une entrée de gaz pour l'entrée du gaz de purge dans l'espace de traitement (28) et une sortie de gaz pour l'évacuation du gaz de purge de l'espace de traitement (28) pour le rinçage de l'espace de traitement du dispositif de fabrication de moule avec un gaz de purge,
- un arrangement de filtrage (98, 102),
- un dispositif de transport de gaz (104), en particulier une pompe, disposé en série avec le dispositif de filtrage (98, 102) et de préférence du côté sortie de l'arrangement de filtrage (98, 102),
- des éléments côté module d'échange d'un système de conduite de gaz présentant du côté de l'espace de traitement la sortie de gaz et une interface de raccordement (92) associée à celle-ci du côté de l'espace de traitement, dans lequel les éléments du système de conduite de gaz du côté du module d'échange comprennent l'arrangement de filtrage (98, 102) et le dispositif de transport de gaz (104),
- une interface de raccordement (94) du côté du module d'échange qui est reliée de manière amovible à l'interface de raccordement (92) du côté de l'espace de traitement ou dans lequel le module d'échange (16a) peut être transféré d'une position de séparation à une position de raccordement définie, de sorte que dans la position de raccordement, il est intégré dans la fabrication de moule de telle sorte que les interfaces de raccordement (92, 94) du système de conduite de gaz sont ou peuvent être connectées les unes aux autres.
